Europäisches Patentamt

European Patent Office

Office européen des brevets

(19)

(11) **EP 0 952 754 B1**

(12) **EUROPÄISCHE PATENTSCHRIFT**

(45) Veröffentlichungstag und Bekanntmachung des Hinweises auf die Patenterteilung:
**21.12.2005 Patentblatt 2005/51**

(51) Int Cl.$^7$: **H04L 12/56**

(21) Anmeldenummer: **99107769.4**

(22) Anmeldetag: **19.04.1999**

(54) **Verfahren zur Steuerung einer paketorientierten Datenübermittlung über ein Koppelfeld**

Method of controlling a packet-oriented data transfer over a switching network

Procédé pour commander un transfert de données orienté paquet à travers un réseau de commutation

(84) Benannte Vertragsstaaten:
**DE FR GB IT**

(30) Priorität: **21.04.1998 DE 19817789**

(43) Veröffentlichungstag der Anmeldung:
**27.10.1999 Patentblatt 1999/43**

(73) Patentinhaber: **SIEMENS AKTIENGESELLSCHAFT**
**80333 München (DE)**

(72) Erfinder:
• **Boll, Gunnar**
 **85579 Neubiberg (DE)**
• **Thoms, Mike**
 **82110 Germering (DE)**
• **Totzke, Jürgen**
 **85586 Poing (DE)**
• **Deml, Reinhard**
 **81549 München (DE)**
• **Wahler, Josef**
 **82024 Taufkirchen (DE)**

(56) Entgegenhaltungen:
**WO-A-97/01895 WO-A-97/22224**
**US-A- 5 357 507**

EP 0 952 754 B1

**Beschreibung**

Durch den zunehmenden Bedarf an einer Übertragung von Videoinformationen in der modernen Kommunikationstechnik, wie z.B. Fest- und Bewegtbilder bei Bildtelefonanwendungen, oder die Darstellung von hochauflösenden Graphiken an modernen DV-Anlagen, steigt die Bedeutung von Übertragungs- und Vermittlungtechniken für hohe Datenübertragungsraten (größer 100 Mbit/s). Ein bekanntes Datenübertragungsverfahren für hohe Datengeschwindigkeiten ist der sogenannte Asynchrone Transfer Modus (ATM). Eine Datenübertragung auf Basis des Asynchronen Transfer Modus ermöglicht derzeit eine variable Übertragungsbitrate von bis zu 622 Mbit/s.

Aus dem Datenblatt "MOS INTEGRATED CIRCUIT µPD98410", NEC Corporation, 1997, Document No. S12624EJ1V0DS00 (1st edition) ist ein hochintegrierter ATM-Durchschaltebaustein mit einer Verarbeitungsleistung von 1,2 Gbit/s bekannt, der eine Adressierung von mehreren teilnehmerbezogenen Schnittstellen über eine hochfrequente ATM-spezifische Busschnittstelle (UTOPIA: Universal Test & Operations PHY Interface for ATM) erlaubt.

Es wurde bereits vorgeschlagen, daß für einen Anschluß von Teilnehmereinrichtungen an die ATM-spezifische Busschnittstelle des hochfrequenten ATM-Durchschaltebausteins sogenannte ATM-Multiplexereinrichtungen vorgesehen sind. Dabei werden mehrere, für den Anschluß der Teilnehmereinrichtungen vorgesehene niederratige Anschlußleitungen (die z.B. eine Bitübertragungsrate von 25,6 Mbit/s oder 155 Mbit/s aufweisen) durch eine ATM-Multiplexereinrichtung auf die höherratige Anschlußleitung des hochfrequenten ATM-Durchschaltebausteins (die z.B. eine Bitübertragungsrate von 622 Mbit/s aufweist) konzentriert.

Üblicherweise werden auf einer Teilnehmereinrichtung, z.B. auf einer DV-Anlage mehrere gleichzeitig ablaufende unterschiedliche Anwendungen bearbeitet, wie z.B. eine Bildtelefon-Anwendung und eine Datenübermittlung auf Basis des IP-Protokolls (Internet Protokoll) für eine Internet-Anwendung. Aus diesen unterschiedlichen Anwendungen resultieren aufgrund der unterschiedlichen Anforderungen an eine anwendungsindividuelle Datenübermittlung unterschiedliche Anforderungen für Verbindungen zwischen jeweils zwei Teilnehmereinrichtungen. Diesen Anforderungen wird durch eine Zusicherung, eine sogenannte Dienstgütequalität Rechnung getragen. Dabei wird insbesondere nach zellverlust-sensitiven und nicht zellverlust-sensitiven Anwendungen unterschieden. Im Rahmen von zellverlust-sensitiven Anwendungen erfolgt eine Datenübermittlung über echtzeitorientierte Verbindungen, bei denen der Verlust einer Datenzelle zu einer Qualitätseinbuße der Verbindung führt, da z.B. aufgrund von Echtzeiterfordernissen die verlorengegangene Datenzelle nicht erneut übermittelt werden kann. Im Rahmen von nicht zellverlust-sensitiven Anwendungen erfolgt eine Datenübermittlung über nicht echtzeitorientierte Verbindungen, bei denen der Verlust einer übermittelten Datenzelle beispielsweise durch eine erneute Übermittlung der verlorengegangenen Datenzelle oder einer zusammengehörigen Folge von Datenzellen (z.B. bei einer Datenübermittlung auf Basis des IP-Protokolls) kompensiert werden kann.

Für ein Erfüllen der Anforderungen, also für eine Zusicherung der 'Dienstgütequalität' werden im Rahmen eines Verbindungsaufbaus sogenannte Dienstgüteparameter mittels eines standardisierten Signalisierungsverfahrens (standardisiert in: ATM Forum, User Network Interface Specification, Version 4.0) von den Teilnehmereinrichtungen an die Steuerung eines ATM-Vermittlungssystems übermittelt. Dadurch wird beispielsweise eine konstante Datenübertragungsrate - in der Literatur häufig mit 'CBR' (constant bit rate) abgekürzt - für eine Verbindung bereitgestellt oder eine realzeitkritische Datenübermittlung - in der Literatur häufig mit 'rt VBR' (realtime variable bit rate) abgekürzt - über ein Koppelfeld des ATM-Vermittlungssystems (gemäß ATM Forum, Traffic Management Specification, Version 4.0) gewährleistet.

Aus dem Artikel "Traffic Management for an ATM Switch with Per-VC Queueing: Concept and Implementation", IEEE Communications Magazine, January 1998, ist bekannt, daß größere ATM-Vermittlungssysteme für eine Zusicherung der 'Dienstgütequalität' einer Verbindung zusätzliche Multiplexeinheiten (SMU: Statistical Multiplexing Unit) aufweisen, die aufgrund der übermittelten 'Dienstgüteparameter' mittels eines speziellen Verfahrens - in der Literatur häufig als 'Statistisches Multiplexen' bezeichnet - die Datenübermittlung über das Koppelfeld steuern. Das Statistische Multiplexen bedingt eine Zwischenspeicherung der zu übermittelnden Daten und somit die Bereitstellung von großen Speichereinheiten.

Für eine Zusicherung der 'Dienstgütequalität' von zwischen Endeinrichtungen bestehenden Verbindungen bei einer Verletzung der vereinbarten 'Dienstgüteparameter' durch eine andere Endeinrichtung sind in größeren ATM-Vermittlungssystemen zusätzlich sogenannte Echtzeit-Verkehrsüberwachungsmechanismen - in der Literatur häufig auch mit 'Policing' bezeichnet - implementiert.

Beispielsweise ist aus der US-Patentschrift US 5,357,507 ein Verfahren für einen Verbindungsaufbau in einem ATM-Netzwerk bekannt, bei dem in einem Netzknoten durch eine zentrale Einrichtung - einen sogenannten Connection Admission Controller - überprüft wird, ob eine Anfrage für einen Verbindungsaufbau akzeptiert oder abgewiesen wird. Hierbei ist lediglich offenbart, dass zwei Schwellwerte "upper und lower bounds" ermittelt werden, wobei eine Anfrage akzeptiert wird, wenn ein sog. operating point unter der "lower bound" ist und eine Anfrage abgewiesen wird, wenn der operating point über der "upper bound" ist.

Aus der internationalen Offenlegungsschrift WO 97/22224 A ist ebenfalls ein Verfahren für eine Call Admission Control in einem ATM-Netzwerk bekannt, bei dem eine Anfrage für eine neue aufzubauende Verbindung oder für eine Erhöhung der zur Verfügung gestellten Übermittlungskapazität unter Berücksichtigung der neu benötigten Übermittlungskapazität und der bereits reservierten Übermittlungskapazität akzeptiert oder abgewiesen wird.

Aus der internationalen Offenlegungsschrift WO 97/01895 A ist wiederum ein Verfahren für eine Call Admission Control in einem ATM-Netzwerk bekannt, bei dem eine Entscheidung über eine Annahme oder eine Abweisung einer Verbindungsanfrage in Abhängigkeit der folgenden Informationen erfolgt:

1) die vorhandene Speichergröße;
2) die zur Verfügung stehende Gesamt-Übertragungskapazität am Ausgang eines Koppelfeldes; und
3) die Belegungsfaktoren für die unterschiedlichen Übertragungsdienste.

Eine Bereitstellung von größeren Speichereinheiten und eine Implementierung komplizierter Echtzeit-Verkehrsüberwachungsmechanismen in kleineren ATM-Vermittlungssysteme - auch als 'workgroup-switches' bezeichnet - ist jedoch nicht wirtschaftlich realisierbar.

Der vorliegenden Erfindung liegt die Aufgabe zugrunde, ein Verfahren anzugeben, durch welches bei einer im Rahmen einer zellverlust-sensitiven Anwendung eingerichteten, auf einer paketorientierten Datenübermittlung basierenden Verbindung zwischen zwei Teilnehmereinrichtungen eine zellverlustfreie Datenübermittlung zwischen den Teilnehmereinrichtungen über ein Koppelfeld sichergestellt wird.

Die Lösung dieser Aufgabe erfolgt erfindungsgemäß mit den Merkmalen des Patentanspruchs 1.

Ein wesentlicher Vorteil der Erfindung besteht darin, daß das erfindungsgemäße Verfahren auf einfache Weise in ein bestehendes ATM-Vermittlungssystem integriert werden kann.

Ein weiterer Vorteil der Erfindung besteht darin, daß die Gesamtverarbeitungsleistung von an das Koppelfeld angeschlossenen Teilnehmereinrichtungen größer als die, von der Schnittstelle des Koppelfelds für eine Datenübermittlung von den angeschlossenen Teilnehmereinrichtungen zum Koppelfeld bereitgestellten Bandbreite sein kann. Dies ergibt sich aus der Tatsache, daß eine zellverlustfreie Datenübermittlung nur für im Rahmen von zellverlust-sensitive Anwendungen eingerichtete Verbindungen gewährleistet wird. Ein Datenverlust im Rahmen einer nicht zellverlust-sensitiven Anwendung kann beispielsweise durch eine erneute Übermittlung der verlorengegangenen Zelle oder einer zusammengehörigen Folge von Datenzellen (z.B. bei einer Datenübermittlung auf Basis des IP-Protokolls) kompensiert werden. Somit können an ein ATM-Vermittlungssystem, in welchem das erfindungsgemäße Verfahren implementiert ist, Teilnehmereinrichtungen mit einer höheren Verarbeitungsleistung angeschlossen werden.

Vorteilhafte Weiterbildungen der Erfindung sind in den Unteransprüchen angegeben.

Durch eine Implementierung von Eingangs- bzw. Ausgangs-Abtastern wird sichergestellt, daß in Fällen, in denen die von einer Teilnehmereinrichtung im Rahmen eines Verbindungsaufbaus für diese Verbindung mit dem Koppelfeld vereinbarten 'Dienstgüteparameter' verletzt werden, nur Verbindungen dieser Teilnehmereinrichtung durch die Verletzung beeinträchtigt werden können. Weitere über das Koppelfeld geführte Verbindungen zwischen nicht an der Verbindung beteiligten Teilnehmereinrichtungen werden durch die Verletzung der 'Dienstgüteparameter' nicht beeinflußt.

Des weiteren weist das Koppelfeld für jede durch das Koppelfeld adressierbare Teilnehmereinrichtung eine feste Anzahl von teilnehmereinrichtungsindividuellen FIFO-Speichern auf, denen jeweils für eine Datenübermittlung zu einer Ziel-Teilnehmereinrichtung in Abhängigkeit der vereinbarten Dienstgüteparameter - in der Literatur auch häufig mit Verkehrsklasse bezeichnet - unterschiedliche Prioritäten (für jede Ziel-Teilnehmereinrichtung identisch) zugeordnet sind. Dabei wird einem teilnehmereinrichtungsindividuellen FIFO-Speicher, der für eine Zwischenspeicherung von im Rahmen einer zellverlust-sensitiven Anwendung zu übermittelnder Daten vorgesehen ist eine höhere Priorität zugeordnet, als einem teilnehmereinrichtungsindividuellen FIFO-Speicher, der für eine Zwischenspeicherung von im Rahmen einer nicht zellverlust-sensitiven Anwendung zu übermittelnder Daten vorgesehen ist. Durch die Zwischenspeicherung von zu einer Ziel-Teilnehmereinrichtung zu übermittelnder Daten in einem teilnehmereinrichtungsindividuellen FIFO-Speicher in Abhängigkeit der vereinbarten 'Dienstgüteparameter' wird sichergestellt, daß bei einer Verletzung der vereinbarten 'Dienstgüteparameter' ein Datenverlust nur bei im Rahmen von nicht zellverlust-sensitiven Anwendungen eingerichteten Verbindungen auftreten kann.

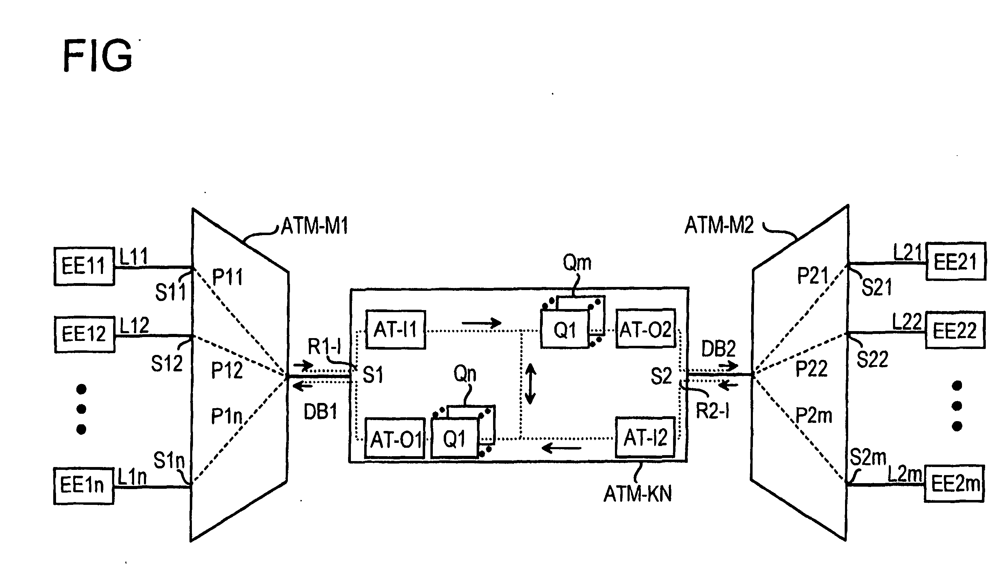

Ein Ausführungsbeispiel der Erfindung wird im folgenden anhand der Zeichnung näher erläutert.

Dabei zeigt:

FIG:  ein Strukturbild zur schematischen Darstellung eines ATM-Koppelfelds mit daran angeschlossenen Teilnehmereinrichtungen.

FIG zeigt eine schematische Darstellung eines ATM-Koppelfelds ATM-KN (z.B. mit einer Verarbeitungsleistung von 1,2 Gbit/s). Das ATM-Koppelfeld ATM-KN weist eine erste und eine zweite Schnittstelle S1, S2 auf, über welche das ATM-Koppelfeld ATM-KN über einen ersten und einen zweiten bidirektionalen Datenbus DB1, DB2 (z.B.

mit einer physikalischen Bandbreite von 622 Mbit/s) mit einer ersten und einer zweiten ATM-Multiplexereinrichtung ATM-M1, ATM-M2 verbunden ist. Für einen Anschluß von Teilnehmereinrichtungen an das ATM-Koppelfeld ATM-KN sind Teilnehmereinrichtungen EE11,...,EE1n über jeweils eine Anschlußleitung L11,...,L1n mit jeweils einer ATM-Schnittstelle S11,...,S1n der ersten ATM-Multiplexereinrichtung ATM-M1 und Teilnehmereinrichtungen EE21,..., EE2m über jeweils eine Anschlußleitung L21,...,L2m mit jeweils einer ATM-Schnittstelle S21,...,S2m der zweiten ATM-Multiplexereinrichtung ATM-M2 verbunden.

Die Teilnehmereinrichtungen EE11,...,EE1n; EE21,...,EE2m sind somit über logische Punkt-zu-Punkt-Verbindungen P11,...P1n; P21,...,P2m (in der Figur gestrichelt dargestellt) mit dem ATM-Koppelfeld ATM-KN verbunden. Für die logischen Punkt-zu-Punkt-Verbindungen P11,...P1n; P21,...,P2m sind für eine Datenübermittlung jeweils unterschiedliche Gesamtbandbreiten LBB einstellbar.

Bei dem als Asynchronen Transfer Modus (ATM) bekannten Datenübertragungsverfahren werden für den Datentransport Datenpakete fester Länge, sogenannte Zellen benutzt. Eine ATM-Zelle setzt sich aus einem, die für den Transport einer ATM-Zelle relevanten Vermittlungs-Daten enthaltenen, fünf Bytes langem Zellkopf, dem sogenannten 'header' und einem 48 Bytes langem Nutzdatenfeld, dem sogenannten 'payload' zusammen.

Bei einer Übermittlung von ATM-Zellen von einer Teilnehmereinrichtung EE11,... ,EE1n; EE21,... ,EE2m zum ATM-Koppelfeld ATM-KN werden die über eine logische Punkt-zu-Punkt-Verbindung P11,...,P1n; P21,...,P2m übermittelten ATM-Zellen in der ersten bzw. zweiten ATM-Multiplexereinrichtung ATM-M1, ATM-M2 in anschlußleitungsindividuellen - nicht dargestellten - FIFO-Speichern (First In First Out) zwischengespeichert. Die zwischengespeicherten ATM-Zellen werden gemäß der für diese Verbindung vereinbarten Übertragungsbandbreite aus den FIFO-Speichern ausgelesen und an das ATM-Koppelfeld ATM-KN übermittelt. Eine Übermittlung von ATM-Zellen vom ATM-Koppelfeld ATM-KN zu einer Teilnehmereinrichtung EE11,...,EE1n; EE21, ...,EE2m erfolgt in analoger Weise.

Des weiteren weist das ATM-Koppelfeld ATM-KN zwei Eingangs-Abtaster AT-I1, AT-I2 und zwei Ausgangs-Abtaster AT-O1, AT-O2 auf. Der Eingangs-Abtaster AT-I1 und der Ausgangs-Abtaster AT-O1 sind der ersten Schnittstelle S1 und der Eingangs-Abtaster AT-I2 und der Ausgangs-Abtaster AT-02 der zweiten Schnittstelle S2 zugeordnet. Für eine Datenübermittlung ausgehend vom ATM-Koppelfeld ATM-KN über die erste Schnittstelle S1 weist das ATM-Koppelfeld ATM-KN n teilnehmereinrichtungsindividuelle FIFO-Speicher Q1,...,Qn (First In First Out) und für eine Datenübermittlung ausgehend vom ATM-Koppelfeld ATM-KN über die zweite Schnittstelle S2 m teilnehmereinrichtungsindividuelle FIFO-Speicher Q1,...,Qm auf. Die teilnehmereinrichtungsindividuellen FIFO-Speicher Q1,...,Qn; Q1,...,Qm sind in eine feste Anzahl von Teilspeichern untergliedert, wobei jedem Teilspeicher eines teilnehmereinrichtungsindividuellen FIFO-Speichers Q1,...,Qn; Q1,...,Qm - in der Literatur häufig mit 'Weighted Fair Queues' bezeichnet - eine unterschiedliche Priorität zugeordnet ist.

So wird einem Teilspeicher, der für eine Zwischenspeicherung von im Rahmen einer zellverlust-sensitiven Anwendung zu übermittelnden Daten vorgesehen ist eine höhere Priorität zugeordnet, als einem Teilspeicher, der für eine Zwischenspeicherung von im Rahmen einer nicht zellverlust-sensitiven Anwendung zu übermittelnden Daten vorgesehen ist. Dies gewährleistet, daß in Fällen, in denen die vereinbarten 'Dienstgüteparameter', z.B. eine Zusicherung einer konstanten Übertragungsbandbreite von 2 Mbit/s von einer Teilnehmereinrichtung EE11,...,EE1n; EE21,..., EE2m nicht eingehalten werden, ein Datenverlust zuerst bei niederprioren im Rahmen einer nicht zellverlust-sensitiven Anwendung eingerichteten Verbindungen auftritt.

Aufgrund der für eine logische Punkt-zu-Punkt-Verbindung P11, ...,P1n; P21,...,P2m zwischen einer Teilnehmereinrichtung EE11,...,EE1n; EE21,...,EE2m und dem ATM-Koppelfeld ATM-KN vereinbarten Gesamtbandbreite LBB wird für jede logische Punkt-zu-Punkt-Verbindung P11,...,P1n; P21,...,P2m sowohl für eine Datenübermittlung zum als auch ausgehend vom ATM-Koppelfeld ATM-KN ein sogenanntes Zellratenintervall für die jeweilige Punkt-zu-Punkt-Verbindung P11,...,P1n; P21,...,P2m ermittelt, d.h. die Anzahl der ATM-Zellen, die in einem gewissen Zeitintervall von einer Teilnehmereinrichtung EE11,..., EE1n; EE21,...,EE2m zum ATM-Koppelfeld ATM-KN bzw. vom ATM-Koppelfeld ATM-KN an eine Teilnehmereinrichtung EE11,..., EE1n; EE21,...,EE2m übermittelt werden sollen. Die logischen Punkt-zu-Punkt-Verbindung P11,...,P1n; P21,...,P2m werden eingangsseitig durch die Eingangs-Abtaster AT-I1, AT-I2 entsprechend dem Zellratenintervall nacheinander zu den teilnehmereinrichtungsindividuelle FIFO-Speichern Q1,...,Qn; Q1,..., Qm durchgeschaltet. Die im Rahmen einer Endgeräteverbindung von einer Ursprungs-Teilnehmereinrichtung EE11,...,EE1n; EE21,...,EE2m zum ATM-Koppelfeld ATM-KN übermittelten ATM-Zellen werden aufgrund der für diese Endgeräteverbindung vereinbarten Dienstgüteparameter in einem entsprechenden Teilspeicher, des der Ziel-Teilnehmereinrichtung EE11,...,EE1n; EE21,...,EE2m zugeordneten teilnehmereinrichtungsindividuellen FIFO-Speichern Q1,...,Qn; Q1,...,Qm zwischengespeichert. Ausgangsseitig werden die zu übermittelnden ATM-Zellen durch die Ausgangs-Abtaster AT-O1, AT-02 mit dem vereinbarten Zellratenintervall aus den teilnehmereinrichtungsindividuellen FIFO-Speichern Q1,...,Qn; Q1,...,Qm ausgelesen und an die adressierte Ziel-Teilnehmereinrichtung EE11,...,EE1n; EE21, ...,EE2m übermittelt.

Durch die Eingangs-Abtaster AT-I1, AT-I2 bzw. die Ausgangs-Abtaster AT-O1, AT-O2 wird sichergestellt, daß in Fällen, in denen die von einer Teilnehmereinrichtung EE11,...,EE1n; EE21,...,EE2m im Rahmen eines Verbindungsaufbaus für diese Verbindung mit dem ATM-Koppelfeld ATM-KN vereinbarten Dienstgüteparameter durch die Teilnehmereinrichtung EE11,...,EE1n; EE21,...,EE2m verletzt werden, nur Verbindungen dieser Teilnehmereinrichtung EE11,...,EE1n; EE21,...,EE2m durch die Verletzung beeinträchtigt werden können. Weitere über das ATM-Koppelfeld ATM-KN geführte Verbindungen zwischen nicht an der Verbindung beteiligten Teilnehmereinrichtungen EE11,...,EE1n; EE21,...,EE2m werden durch die Verletzung der Dienstgüteparameter nicht beeinflußt.

Um für im Rahmen von zellverlust-sensitiven Anwendungen eingerichtete Verbindungen eine verlustfreie Datenübermittlung über das ATM-Koppelfeld ATM-KN gewährleisten zu können, wird für alle logischen Punkt-zu-Punkt-Verbindungen P11,...,P1n; P21,...,P2m zwischen dem ATM-Koppelfeld ATM-KN und einer Teilnehmereinrichtung EE11,...,EE1n; EE21,...,EE2m jeweils eine individuelle Teil-Leitungsbandbreite TBB eingestellt. Die eingestellte Teil-Leitungsbandbreite TBB einer logischen Punkt-zu-Punkt-Verbindung P11,...,P1n; P21,...,P2m bezeichnet die maximal über eine Anschlußleitung L11,...,L1n; L21,..., L2m für eine Datenübermittlung im Rahmen von einer oder mehreren zellverlust-sensitiven Anwendungen zur Verfügung gestellten Verbindungsbandbreite. Die Festlegung der Teil-Leitungsbandbreite TBB erfolgt dabei derart, daß die Summe der Teil-Leitungsbandbreiten TBB der über eine ATM-Multiplexereinrichtung ATM-M1, ATM-M2 geführten logischen Punkt-zu-Punkt-Verbindungen P11,...,P1n; P21,...,P2m die durch die entsprechende Teilnehmer-Schnittstelle S1, S2 des ATM-Koppelfelds ATM-KN für einen Datentransfer von den Teilnehmereinrichtungen EE11,...,EE1n; EE21,...,EE2m zum ATM-Koppelfeld ATM-KN bereitgestellten Bandbreite - entspricht der bereitgestellten Bandbreite $BB_{R1-I}$, $BB_{R2-I}$ am Referenzpunkt R1-I bzw. am Referenzpunkt R2-I - nicht überschreitet:

$$\sum_{P11...P1n} TBB \leq BB_{R1-I} \quad und \quad \sum_{P21...P2m} TBB \leq BB_{R2-I} \; .$$

Weiter wird die Anzahl n,m der über eine ATM-Multiplexereinrichtung ATM-M1, ATM-M2 geführten logischen Punkt-zu-Punkt-Verbindungen P11,...,P1n; P21,...,P2m (entspricht der Anzahl der an einer ATM-Multiplexereinrichtung ATM-M1, ATM-M2 angeschlossenen Teilnehmereinrichtungen EE11,...,EE1n; EE21,..., EE2m) durch die bereitgestellte Bandbreite $BB_{R1-I}$, $BB_{R2-1}$ am Referenzpunkt R1-I bzw. am Referenzpunkt R2-I begrenzt:

$$\sum_{P11...P1n} LBB \leq BB_{R1-I} + \lambda_1 \quad und \quad \sum_{P21...P2m} LBB \leq BB_{R2-I} + \lambda_2 \; .$$

Die ermittelte Summe der Bandbreiten LBB der über eine ATM-Multiplexereinrichtung ATM-M1, ATM-M2 geführten logischen Punkt-zu-Punkt-Verbindungen P11,...,P1n; P21,...,P2m kann die bereitgestellte Bandbreite $BB_{R1-I}$, $BB_{R2-I}$ am Referenzpunkt R1-I um einen Wert $\lambda_1$ bzw. am Referenzpunkt R2-I um einen Wert $\lambda_2$ übersteigen. Die Werte $\lambda_1$ und $\lambda_2$ werden dabei durch die Anzahl von, in den ATM-Multiplexereinrichtungen ATM-M1, ATM-M2 vorhandenen Speicherplätzen bestimmt.

Im Rahmen eines Verbindungsaufbaus einer Verbindung für zellverlust-sensitive Anwendungen zwischen einer Ursprungs-Teilnehmereinrichtung EE11 und einer Ziel-Teilnehmereinrichtung EE21 wird überprüft, ob die Summe der Verbindungsbandbreiten $BB_{ZSV}$ von aktuell über die logische Punkt-zu-Punkt-Verbindung P21 zwischen ATM-Koppelfeld ATM-KN und Ziel-Teilnehmereinrichtung EE21 geführten und im Verbindungsaufbau befindlichen im Rahmen von zellverlust-sensitiven Anwendungen eingerichteten Verbindungen, die für die logische Punkt-zu-Punkt-Verbindung P21 festgelegte Teil-Leitungsbandbreite $TBB_{P21}$ überschreitet:

$$\sum_{Verbindungen} BB_{ZSV} \leq TBB_{P21} \; .$$

Ist die ermittelte Summe der Verbindungsbandbreiten $BB_{ZSV}$ kleiner oder gleich der für die logische Punkt-zu-Punkt-Verbindung P21 zwischen ATM-Koppelfeld ATM-KN und Ziel-Teilnehmereinrichtung EE21 festgelegte Teil-Leitungsbandbreite $TBB_{P21}$, so wird der Verbindungswusch akzeptiert und die Verbindung zwischen der Ursprungs-Teilnehmereinrichtung EE11 und der Ziel-Teilnehmereinrichtung EE21 eingerichtet.

Durch die Kombination des Ausgangs-Abtasters AT-O2, der eine Datenübermittlung zwischen dem ATM-Koppelfeld ATM-KN und der Ziel-Teilnehmereinrichtung EE21 über die logische Punkt-zu-Punkt-Verbindung P21 mit der eingestellten Gesamtbandbreite LBB realisiert mit dem, durch die Zuordnung einer Priorität gewichteten teilnehmereinrichtungsindividuellen FIFO-Speicher Q1 wird für im Rahmen von zellverlust-sensitiven Anwendungen eingerichtete Verbindungen eine zellverlustfreie Datenübermittlung gewährleistet. Für im Rahmen von nicht zellverlust-sensitiven Anwendungen eingerichtete Verbindungen wird keine zellverlustfreie Datenübermittlung gewährleistet, da ein Datenverlust, z.B. durch eine erneute Übermittlung der verlorengegangenen Datenzellen kompensiert werden kann.

**Patentansprüche**

1.  Verfahren zur Steuerung einer paketorientierten Datenübermittlung über ein einzelnes Koppelfeld (ATM-KN),

    wobei mehrere Teilnehmereinrichtungen (EE11,...,EE1n) über jeweils eine logische Punkt-zu-Punkt-Verbindung (P11,...,P1n) mit einer gemeinsamen Schnittstelle (S1) des Koppelfelds (ATM-KN) verbindbar sind,
    wobei für die logischen Punkt-zu-Punkt-Verbindungen (P11,..., P1n) jeweils eine verbindungsindividuelle Gesamtbandbreite (LBB) und für eine echtzeitorientierte Datenübermittlung zusätzlich eine verbindungsindividuelle Teil-Leitungsbandbreite (TBB) einstellbar ist,
    wobei im Rahmen eines Aufbaus einer Verbindung für echtzeitorientierte Datenübermittlung zwischen einer Ursprungs-Teilnehmereinrichtung (EE11) und einer Ziel-Teilnehmereinrichtung (EE21) die Summe der Verbindungsbandbreiten von aktuell über die logische Punkt-zu-Punkt-Verbindung (P21) nur dieser Ziel-Teilnehmereinrichtung (EE21) geführten und im Verbindungsaufbau befindlichen Verbindungen für echtzeitorientierte Datenübermittlung ermittelt wird, und
    wobei die Verbindung nur dann eingerichtet wird, wenn die ermittelte Summe der Verbindungsbandbreiten kleiner oder gleich einem vorgebbaren Grenzwert ist.

2.  Verfahren nach Anspruch 1,
    **dadurch gekennzeichnet,**
    **daß** weitere Teilnehmereinrichtungen (EE21,...,EE2m) über jeweils eine logische Punkt-zu-Punkt-Verbindung (P21,...,P2m) mit einer weiteren, diesen Teilnehmereinrichtungen (EE21,..., EE2m) gemeinsamen weiteren Schnittstelle (S2) des Koppelfelds (ATM-KN) verbindbar sind.

3.  Verfahren nach Anspruch 1 oder 2,
    **dadurch gekennzeichnet,**
    **daß** der vorgebbare Grenzwert gleich der verbindungsindividuellen Teil-Leitungsbandbreite, TBB, der, die Ziel-Teilnehmereinrichtung (EE21) mit dem Koppelfeld (ATM-KN) verbindenden logischen Punkt-zu-Punkt-Verbindung (P21) ist.

4.  Verfahren nach einem der vorhergehenden Ansprüche,
    **dadurch gekennzeichnet,**
    **daß** ein Einstellen der verbindungsindividuellen Teil-Leitungsbandbreite, TBB, einer logischen Punkt-zu-Punkt-Verbindung (P11,...,P1n; P21,...,P2n) derart erfolgt, daß die Summe der verbindungsindividuellen Teil-Leitungsbandbreiten, TBB, der logischen Punkt-zu-Punkt-Verbindungen (P11,...,P1n; P21, ...,P2n) einen vorgebbaren weiteren Grenzwert nicht übersteigt.

5.  Verfahren nach Anspruch 4,
    **dadurch gekennzeichnet,**
    **daß** der vorgebbare weitere Grenzwert gleich der, von der Schnittstelle (S1, S2) des Koppelfelds (ATM-KN) für einen Datentransfer von den Teilnehmereinrichtungen (EE11,...,EE1n; EE21,...,EE2m) zum Koppelfeld (ATM-KN) aufweisenden Bandbreite ist.

6.  Verfahren nach einem der vorhergehenden Ansprüche,
    **dadurch gekennzeichnet,**
    **daß** die Anzahl (n,m) der logischen Punkt-zu-Punkt-Verbindungen (P11,...,P1n; P21,...,P2n) **dadurch** begrenzt wird, daß die Summe der verbindungsindividuellen Gesamtbandbreiten, LBB, der logischen Punkt-zu-Punkt-Verbindungen (P11,...,P1n; P21,...,P2n) nur um einen vorgebbaren Wert größer sein darf, als die von der Schnittstelle (S1, S2) des Koppelfelds (ATM-KN) für einen Datentransfer von den Teilnehmereinrichtungen (EE11,...,EE1n; EE21,...,EE2m) zum Koppelfeld (ATM-KN) zur Verfügung gestellten Bandbreite.

7.  Verfahren nach einem der vorhergehenden Ansprüche,
    **dadurch gekennzeichnet,**

**daß** das Koppelfeld (ATM-KN) mindestens einen Eingangs-Abtaster (AT-I1, AT-I2) und mindestens einen Ausgangs-Abtaster (AT-O1, AT-02) aufweist,

wobei durch den Eingangs-Abtaster (AT-I1, AT-I2) und den Ausgangs-Abtaster (AT-O1, AT-02) ein Einrichten der logischen Punkt-zu-Punkt-Verbindungen (P11,...,P1n; P21,...,P2n) derart erfolgt, daß eine Datenübermittlung zwischen dem Koppelfeld (ATM-KN) und einer Teilnehmereinrichtung (EE11,...,EE1n; EE21,...,EE2n) mit der eingestellten verbindungsindividuellen Gesamtbandbreite, LBB, erfolgt.

8. Verfahren nach einem der vorhergehenden Ansprüche,
   **dadurch gekennzeichnet,**
   **daß** das Koppelfeld (ATM-KN) für jede adressierbare Teilnehmereinrichtung (EE11,...,EE1n; EE21,...,EE2n) einen teilnehmereinrichtungsindividuellen FIFO-Speicher (Q1,...,Qn; Q1, ...,Qm) aufweist, der in eine feste Anzahl von Teilspeichern untergliedert ist,
   wobei von der Ursprungs-Teilnehmereinrichtung (EE11) an die Ziel-Teilnehmereinrichtung (EE21) zu übermittelnde Daten in einem Teilspeicher des, der Ziel-Teilnehmereinrichtung (EE21) zugeordneten teilnehmereinrichtungsindividuellen FIFO-Speichers (Q1) zwischengespeichert werden.

9. Verfahren nach Anspruch 8,
   **dadurch gekennzeichnet,**
   **daß** eine Zwischenspeicherung in einem Teilspeicher abhängig von einer für die Endgeräteverbindung zwischen der Ursprungs-Teilnehmereinrichtung (EE11) und der Ziel-Teilnehmereinrichtung (EE21) vereinbarten Endgeräteverbindungs-Klasse erfolgt.

10. Verfahren nach Anspruch 8 oder 9,
    **dadurch gekennzeichnet,**
    **daß** für die Teilspeicher eines teilnehmereinrichtungsindividuellen FIFO-Speichers (Q1,...,Qn; Q1,...,Qm) unterschiedliche Prioritäten einstellbar sind,
    wobei für Teilspeicher, die für ein Zwischenspeicherung von Daten im Rahmen einer echtzeitorientierten Datenübermittlung vorgesehen sind eine höhere Priorität eingestellt wird, als für Teilspeicher, die für ein Zwischenspeicherung von Daten im Rahmen einer nicht echtzeitorientierten Datenübermittlung vorgesehen sind.

**Claims**

1. Method for controlling a packet-oriented data transmission via a single switching network (ATM-KN),
   wherein a plurality of subscriber devices (EE11,...,EE1n) can be connected via a logical point-to-point connection (P11,...,P1n) in each case to a common interface (S1) of said switching network (ATM-KN),
   wherein a connection-specific total bandwidth (LBB) can be set in each case for the logical point-to-point connections (P11,....P1n) and in addition a connection-specific partial line bandwidth (TBB) can be set for a real-time-oriented data transmission to each of the respective logical point-to-point connections (P11,....P1n),
   wherein in the course of the establishment of a connection for real-time-oriented data transmission between an originating subscriber device (EE11) and a destination subscriber device (EE21), the sum of the connection bandwidths of connections currently routed via the logical point-to-point connection (P21) only of said destination subscriber device (EE21) and connections in the process of being set up for real-time-oriented data transmission via the respective logical point-to-point connection is determined, and
   wherein the connection is set up only if the sum of the connection bandwidths determined is less than or equal to a predefinable limit value.

2. Method according to claim 1,
   **characterised in that**
   further subscriber devices (EE21,...,EE2m) can be connected via a logical point-to-point connection (P21,...,P2m) in each case to a further interface (S2), common to said further subscriber devices (EE21,...,EE2m), of the switching network (ATM-KN).

3. Method according to claim 1 or 2,
   **characterised in that**
   the predefinable limit value is equal to the connection-specific partial line bandwidth, TBB, of the logical point-to-point connection (P21) connecting the destination subscriber device (EE21) to the switching network (ATM-KN).

**4.** Method according to one of the preceding claims,
**characterised in that**
the connection-specific partial line bandwidth, TBB, of a logical point-to-point connection (P11,...,P1n; P21,...,P2m) is set such that the sum of connection-specific partial line bandwidths, TBB, of the logical point-to-point connections (P11,...,P1n; P21,...,P2m) does not exceed a predefinable further limit value.

**5.** Method according to claim 4,
**characterised in that**
the predefinable further limit value is equal to the bandwidth from the interface (S1, S2) of the switching network (ATM-KN) for a data transfer from the subscriber devices (EE11,...,EE1n; EE21,...,EE2m) to the switching network (ATM-KN).

**6.** Method according to one of the preceding claims,
**characterised in that**
the number (n,m) of the logical point-to-point connections (P11,...,P1n; P21,...,P2m) is limited by the fact that the sum of connection-specific total bandwidths, LBB, of the logical point-to-point connections (P11,...,P1n; P21,..., P2m) may be greater only by a predefinable value than the bandwidth made available by the interface (S1, S2) of the switching network (ATM-KN) for a data transfer from the subscriber devices (EE11,...,EE1n; EE21,...,EE2m) to the switching network (ATM-KN).

**7.** Method according to one of the preceding claims,
**characterised in that**
the switching network (ATM-KN) has at least one input scanner (AT-I1, AT-I2) and at least one output scanner (AT-O1, AT-02), wherein the logical point-to-point connections (P11,...,P1n; P21,...,P2m) are set up by the input scanner (AT-I1, AT-I2) and the output scanner (AT-O1, AT-02) such that a data transmission between the switching network (ATM-KN) and a subscriber device (EE11,...,EE1n; EE21,...,EE2m) is effected using the set connection-specific total bandwidth, LBB.

**8.** Method according to one of the preceding claims,
**characterised in that**
the switching network (ATM-KN) has a subscriber-device-specific FIFO memory (Q1,...,Qn; Q1,...,Qm) for each addressable subscriber device (EE11,...,EE1n; EE21,...,EE2m), said FIFO memory being subdivided into a fixed number of sub-memories, wherein data to be transmitted from the originating subscriber device (EE11) to the destination subscriber device (EE21) is buffered in a sub-memory of the subscriber-device-specific FIFO memory (Q1) assigned to the destination subscriber device (EE21).

**9.** Method according to claim 8,
**characterised in that**
a buffering in a sub-memory is effected as a function of a terminal device connection class agreed between the originating subscriber device (EE11) and the destination subscriber device (EE21) for the terminal device connection.

**10.** Method according to claim 8 or 9,
**characterised in that**
different priorities can be set for the sub-memories of a subscriber-device-specific FIFO memory (Q1,...,Qn; Q1,..., Qm), wherein a higher priority is set for sub-memories provided for buffering data as part of a real-time-oriented data transmission than for sub-memories provided for buffering data as part of a non-real-time-oriented data transmission.

**Revendications**

**1.** Procédé de commande d'un transfert de données orienté paquets par l'intermédiaire d'un champ de couplage individuel (ATM-KN),
plusieurs équipements d'abonnés (EE11, ..., EE1n) pouvant être reliés par l'intermédiaire de respectivement une connexion logique de point à point (P11, ..., P1n) avec une interface commune (S1) du champ de couplage (ATM-KN),
respectivement une largeur de bande globale (LBB) individuelle à la connexion étant réglable pour les connexions logiques de point à point (P11, ..., P1n) et, additionnellement, une largeur de bande de ligne partielle (TBB) individuelle à la connexion étant réglable pour un transfert de données orienté temps réel,

dans le cadre d'un établissement de connexion pour un transfert de données orienté temps réel entre un équipement d'abonné source (EE11) et un équipement d'abonné de destination (EE21), la somme des largeurs de bande de connexion de connexions passant actuellement par la connexion logique de point à point (P21) uniquement de cet équipement d'abonné de destination (EE21) et en cours d'établissement étant déterminée pour un transfert de données orienté temps réel et

la connexion n'étant mise en place que si la somme déterminée des largeurs de bande de connexion est inférieure ou égale à une valeur limite prédéterminable.

2. Procédé selon la revendication 1,
**caractérisé en ce que**
d'autres équipements d'abonnés (EE21, ..., EE2m) peuvent être connectés, par l'intermédiaire de respectivement une connexion logique de point à point (P21, ..., P2m), à une autre interface (S2) du champ de couplage (ATM-KN) commune à ces équipements d'abonnés (EE21, ..., EE2m).

3. Procédé selon la revendication 1 ou 2,
**caractérisé en ce que**
la valeur limite prédéterminable est égale à la largeur de bande de ligne partielle individuelle à la connexion, TBB, de la connexion logique de point à point (P21) qui relie l'équipement d'abonné de destination (EE21) au champ de couplage (ATM-KN).

4. Procédé selon l'une des revendications précédentes,
**caractérisé en ce**
**qu'**un réglage de la largeur de bande de ligne partielle TBB d'une connexion logique de point à point (P11, ..., P1n; P21, .. P2n), individuelle à la connexion, se fait de manière telle que la somme des largeurs de bande de ligne partielles TBB des connexions logiques de point à point (P11, ..., P1n; P21, ..., P2n), individuelles à la connexion, ne dépasse pas une autre valeur limite prédéterminable.

5. Procédé selon la revendication 4,
**caractérisé en ce que**
l'autre valeur limite prédéterminable est égale à la largeur de bande présent de l'interface (S1, S2) du champ de couplage (ATM-KN) pour un transfert de données des équipements d'abonnés (EE11, ..., EE1n; EE21, ..., EE2m) vers le champ de couplage (ATM-KN).

6. Procédé selon l'une des revendications précédentes,
**caractérisé en ce que**
le nombre (n, m) des connexions logiques de point à point (P11, ..., P1n; P21, ..., P2n) est limité du fait que la somme des largeurs de bande globales LBB, individuelles à la connexion, des connexions logiques de point à point (P11, ..., P1n; P21, ..., P2n) ne peut être supérieure que d'une valeur prédéterminable à la largeur de bande mise à disposition par l'interface (S1, S2) du champ de couplage (ATM-KN) pour un transfert de données des équipements d'abonnés (EE11, ..., EE1n; EE21, ..., EE2m) vers le champ de couplage (ATM-KN).

7. Procédé selon l'une des revendications précédentes,
**caractérisé en ce que**
le champ de couplage (ATM-KN) comprend au moins un échantillonneur d'entrée (AT-I1, AT-I2) et au moins un échantillonneur de sortie (AT-O1, AT-02),
une mise en place des connexions logiques de point à point (P11, ..., P1n; P21, .., P2n) étant opérée par l'échantillonneur d'entrée (AT-I1, AT-I2) et l'échantillonneur de sortie (AT-O1, AT-O2) de manière telle qu'un transfert de données entre le champ de couplage (ATM-KN) et un équipement d'abonné (EE11, ..., EE1n; EE21, ..., EE2n) se fait avec la largeur de bande globale LBB réglée, individuelle à la connexion.

8. Procédé selon l'une des revendications précédentes,
**caractérisé en ce que**
le champ de couplage (ATM-KN) comporte, pour chaque équipement d'abonné adressable (EE11, ..., EE1n; EE21, ..., EE2n), une mémoire FIFO (Q1, ..., Qn; Q1, ..., Qm) individuelle à l'équipement d'abonné, laquelle est subdivisée en un nombre fixe de mémoires partielles,
des données à transférer de l'équipement d'abonné source (EE11) à l'équipement d'abonné de destination (EE21) étant mises en mémoire temporairement dans une mémoire partielle de la mémoire FIFO (Q1) individuelle à l'équipement d'abonné, affectée à l'équipement d'abonné de destination (EE21).

9. Procédé selon la revendication 8,
   **caractérisé en ce**
   **qu'**une mise en mémoire intermédiaire se fait dans une mémoire partielle en fonction d'une classe de connexion de terminaux convenue pour la connexion de terminaux entre l'équipement d'abonné source (EE11) et l'équipement d'abonné de destination (EE21).

10. Procédé selon la revendication 8 ou 9,
    **caractérisé en ce que**
    différentes priorités sont réglables pour les mémoires partielles d'une mémoire FIFO (Q1, ..., Qn; Q1, ..., Qm) individuelle à l'équipement d'abonné,
    une priorité plus élevée étant réglée pour des mémoires partielles qui sont prévues pour une mise en mémoire temporaire de données dans le cadre d'un transfert de données orienté temps réel que pour des mémoires partielles qui sont prévues pour une mise en mémoire temporaire de données dans le cadre d'un transfert de données non orienté temps réel.

FIG

EE11  L11
S11  P11
EE12  L12
S12  P12
P1n
EE1n  L1n
S1n

ATM-M1

R1-I
S1
DB1

ATM-KN

AT-I1  →
Qn
Q1
AT-O1  Q1

Qm
Q1  AT-O2
↕
S2
AT-I2  ←

DB2
R2-I

ATM-M2

P21  S21  L21  EE21
P22  S22  L22  EE22
P2m
S2m  L2m  EE2m

EP 0 952 754 B1